# EUROPÄISCHE PATENTSCHRIFT

(11) **EP 0 497 257 B1**
(45) Veröffentlichungstag und Bekanntmachung des Hinweises auf die Patenterteilung: **12.04.1995**
(21) Anmeldenummer: 92101304.1
(22) Anmeldetag: 28.01.1992
(51) Int. Cl.: B23B 27/04, B23B 27/08

(54) **Abstechvorrichtung**
Cutting-off device
Dispositif de tronçonnage

(30) Priorität: 31.01.1991 DE 4102826
(43) Veröffentlichungstag der Anmeldung: 05.08.1992
(73) Patentinhaber: PRÄZISIONS-DREHTEILE, LÖCHER GmbH, 73463 Westhausen (DE)
(72) Erfinder: Löcher, Anton, W-7084 Westhausen (DE)
(74) Vertreter: Lorenz, Werner, Dipl.-Ing.

(56) Entgegenhaltungen:
- EP-A- 0 059 602
- DE-A- 2 018 469
- DE-C- 346 157
- DE-C- 1 151 709
- DE-U- 7 820 161
- GB-A- 980 364
- US-A- 2 625 068
- US-A- 2 907 099
- US-A- 5 044 838

## Beschreibung

Die Erfindung betrifft eine Abstechvorrichtung für sich drehende Werkstücke mit einer Klingenplatte, die an einer an die Klingenplatte zu deren Abstützung angepassten Aufnahme befestigt ist, und mit einem in eine Aussparung der Klingenplatte einsetzbaren Stechplättchen. Eine Abstechvorrichtung dieser Art ist z.B. in der EP 0 059 602 A1 beschrieben.

Andere bekannte Abstechvorrichtungen besitzen eine Klingenplatte, die als rechteckige, längliche Leiste ausgebildet ist. Diese Leiste ist im allgemeinen über eine Schwalbenschwanzführung mit einer Aufnahme verbunden und damit in Längsrichtung zu dieser einstellbar. Die Aufnahme selbst dient als Einspannteil und wird z.B. in einen Werkzeughalter einer Drehmaschine eingesetzt. Das Stechplättchen ist auf der Vorderseite in eine Aussparung der Klingenplatte eingeklemmt.

Nachteilig bei diesen bekannten Abstechvorrichtungen ist, daß sie wenig druckstabil sind. Insbesondere bei höheren Seitendrücken weicht die Klingenplatte aus, so daß der Schnitt ungenau, z.B. ballig, wird.

Ein weiterer erheblicher Nachteil besteht darin, daß die Abstechvorrichtung selbst nicht höhenverstellbar ist. Zur genauen Einstellung auf Werkstückmitte müssen deshalb entsprechende Unterlegteile zwischen der Aufnahme und dem Werkzeughalter eingelegt werden. Wird diese Einstellung nicht genau vorgenommen bzw. kommt es im Laufe des Betriebes zu Veränderungen, z.B. durch einen Verschleiß an dem Stechplättchen, und ist damit das Stechplättchen nicht mehr genau auf Mitte eingestellt, besteht die Gefahr eines Brechens des Stechplättchens, das im allgemeinen aus Hartmetall besteht und damit sehr spröde ist.

Ein weiterer Nachteil besteht darin, daß damit auch die Klemmung selbst sehr labil wird. Dies macht sich insbesondere bei unterbrochenen Schnitten sehr negativ bemerkbar. Die Klemmung wird im Laufe der Zeit locker, und das Stechplättchen kann herausfallen.

Alle genannten Nachteile führen dazu, daß die Standzeiten für die Klingenplatte und das Stechplättchen beschränkt sind.

Die GB-A-980 364 zeigt eine Abstechvorrichtung mit festen Abstechplatten, die an einer propellerartigen Platte angeordnet sind. Die propellerartige Platte ist an einem festen Block befestigt. Eine derartige Ausgestaltung ist nicht für VDI-Automaten geeignet; insbesondere ist sie nicht sehr robust und nicht genau einstellbar.

Der vorliegenden Erfindung liegt daher die Aufgabe zugrunde, eine Abstechvorrichtung der eingangs erwähnten Art zu schaffen, die aufgrund ihrer Ausgestaltung eine längere Standzeit besitzt, insbesondere die robuster ist und die auf die jeweiligen Betriebsverhältnisse besser einstellbar ist und damit genauer arbeitet.

Erfindungsgemäß wird diese Aufgabe durch die im kennzeichnenden Teil von Anspruch 1 genannten Merkmale gelöst.

Durch die relative Verdrehbarkeit der Klingenplatte gegenüber dem Aufnahmeteil kann das in der Klingenplatte angeordnete Stechplättchen in seiner Höhenlage optimal angepaßt werden. Dies bedeutet, man kann nicht nur zu Beginn der Arbeiten, sondern auch auf einfache Weise während des Betriebes durch eine Verstellung der relativen Drehlage zwischen Klingenplatte und Aufnahme entsprechende Höhenkorrekturen vornehmen.

Eine einfache Verdrehbarkeit der Klingenplatte und eine hohe Stabilität wird durch die wenigstens annähernd scheibenförmige Ausgestaltung der Klingenplatte und ihre Lagerung in der Aufnahme über die zentrale Nabe erreicht.

Einer der Hauptvorteile dieser Ausgestaltung liegt darin, daß damit die Standzeit deutlich verlängert wird, denn auf die Klingenplatte und das Stechplättchen wirken keine so hohen Belastungen, da stets auf einfache Weise eine optimale Einstellung durch ein einfaches Nachjustieren ermöglicht wird.

Die erfindungsgemäße Vorrichtung läß sich selbstverständlich nicht nur zum Abstechen, sondern auch zum Einstechen in sich drehende Werkstücke verwenden.

Aufgrund der exakten Einstellung entfallen Schläge und Stöße auf das Stechplättchen, so daß die Klemmung auch bei längeren Betriebszeiten stabil bleibt.

Die Einstellung der Klingenplatte gegenüber der Aufnahme kann auf verschiedene Weise erfolgen. So kann z.B. vorgesehen sein, daß der Anschlag in der Aufnahme als Einstellglied ausgebildet ist.

In einfacher Weise kann dabei das Einstellglied einen Drehbolzen mit einem Exzenterkopf aufweisen.

Da die Verstellung nur in sehr geringem Maße erfolgen muß, läßt sich für die Ein- und Nachjustierung hier in einfacher Weise ein Exzenterkopf verwenden, bei dem durch die Verstellung der Exzentrizität die relative Lage zwischen der Klingenplatte und der Aufnahme geändert wird.

Bildet man die Aufnahme im vorderen Bereich als Aufnahmescheibe aus, die in ihrer Form wenigstens teilweise bzw. annähernd an die Form der Klingenplatte angepaßt ist, das heißt z.B. eine wenigstens annähernd einem Halbkreis entsprechende Form besitzt, dann erhält man auf diese Weise eine sehr stabile, insbesondere druckstabile und gegen Seitenkräfte unempfindliche Ausgestaltung der Abstechvorrichtung. Die Aufnahmescheibe kann nämlich die Klingenplatte über einen weiteren Bereich sehr gut abstützen, so daß sie nicht zu weit frei auskragt, womit die Gefahr von Verbiegungen weitgehend entfällt.

Die Aufnahme kann man grundsätzlich selbstverständlich auch einstückig ausbilden. Aus Herstellungsgründen und für einen billigeren Austausch von Verschleißteilen wird man sie im allgemeinen jedoch zweiteilig ausführen, wobei die Verbindung zwischen den beiden Teilen beliebig sein kann. Für eine schnelle Austauschbarkeit wird man jedoch im allgemeinen eine lösbare Verbindung, z.B. über Schrauben, vorsehen. Die Einstellung bzw. Verstellung der relativen Drehlage der Klingenplatte gegenüber der Aufnahme kann durch ein auf der Rückseite des Drehbolzens angeordnetes Verstellglied erfolgen. Hierzu kann z.B. in einfacher Weise der Drehkolben selbst an seinem hinteren Ende mit einer Innensechskantbohrung versehen sein. Durch eine Drehung des Drehkolbens um seine Längsachse ändert der Exzenterkopf seine Lage und verdreht damit auch die Klingenplatte.

Durch eine Klemmschraube, die in der Aufnahme angeordnet ist, kann der Drehbolzen in der gewünschten Lage arretiert werden. Selbstverständlich sind im Bedarfsfalle jedoch auch noch andere Arretierungsglieder möglich.

Eine sehr vorteilhafte Weiterbildung der Erfindung besteht darin, daß die Klingenplatte derart in der Aufnahme angeordnet ist, daß deren Mittelachse im nicht eingestellten Zustand über der Mittelachse der Aufnahme bzw. des zu bearbeitenden Werkstückes liegt.

Um ein einwandfreies Arbeiten zu ermöglichen, soll nach Möglichkeit ein bestimmter Freiwinkel zwischen dem Stechplättchen und dem zu bearbeitenden Werkstück vorhanden sein. Unter Berücksichtigung der erfindungsgemäßen Verdrehbarkeit zwischen der Klingenplatte und der Aufnahme könnten dabei jedoch Positionen des Stechplättchens auftreten, bei denen der Freiwinkel relativ klein wird.

Durch die erfindungsgemäße versetzte Anordnung der Mittelachsen, die im Bedarfsfalle zwischen 0,2 und 0,4 mm sein kann, wird erreicht, daß die Klingenplatte im allgemeinen in ihrem Sitz zu hoch sein wird. Aus diesem Grunde wird sie nur zur genauen Einstellung nach unten gedreht, womit auf jeden Fall ein ausreichend großer Freiwinkel verbleiben wird bzw. dieser gegebenenfalls sogar noch größer wird.

Dieser Mittenversatz läßt sich in Abhängigkeit und Anpassung an die konstruktiven Gegebenheiten und die Verbindungsart zwischen der Aufnahme und der Klingenplatte verschieden ausgestalten.

In einfacher Weise kann man die Aussparung in der Klingenplatte so anordnen, daß die vordere Spitze des Stechplättchens im nicht eingestellten Zustand über der Mittellinie des zu bearbeitenden Werkstückes liegt. Dies bedeutet, daß man die Aussparung entsprechend um ca. 0,2 - 0,4 mm höher in der Klingenplatte anordnet.

Eine andere Lösungsmöglichkeit hierfür besteht darin, daß man die Anlagekanten des vorderen Teiles der Aufnahme, an denen die Klingenplatte anliegt, außermittig zur Mittelachse anordnet.

Eine weitere vorteilhafte Ausgestaltung der Erfindung kann darin bestehen, daß das Stechplättchen in die Aussparung der Klingenplatte mit Preßsitz eingesetzt ist.

Im Unterschied zu bekannten Aussparungen kann dabei die erfindungsgemäße Aussparung in einfacher Weise als Schlitz bzw. als Nut mit zwei wenigstens annähernd parallel zueinander verlaufenden Schlitz- bzw. Nutwänden ausgebildet sein. Zwischen die Wände wird dann das Stechplättchen eingeklemmt.

Ein Preßsitz läßt sich dabei in einfacher Weise dadurch erreichen, daß sich die Aussparung nach hinten zu verjüngt, d.h. daß die Schlitzwände nach hinten zu leicht konisch zueinander verlaufen. Das Stechplättchen hat bei dieser Ausführung parallel verlaufende Spannflächen.

In vorteilhafter Weise läßt sich die Klingenplatte auch als Wendeplatte mit wenigstens zwei Aussparungen ausbilden.

In diesem Falle läßt sich bei einer defekten Aussparung, wie z.B. einem zu großen Spiel aufgrund Verschleißes, die Klingenplatte durch ein einfaches Verdrehen mit Hilfe der zweiten Aussparung nochmals verwenden. Die Standzeit der Klingenplatte läßt sich damit verdoppeln.

Die erfindungsgemäße Klingenplatte läßt sich in vorteilhafter Weise auch als Scheibenfräser einsetzen. Hierzu ist es lediglich erforderlich, die Klingenplatte mit noch mehr Aussparungen am Umfang zu versehen, z.B. 3, 4, 6 oder mehr, und in die Aussparungen entsprechend Hartmetallplättchen einzuklemmen.

Nachfolgend ist ein Ausführungsbeispiel der Erfindung mit weiteren Merkmalen anhand der Zeichnung prinzipmäßig beschrieben.

Es zeigt:
- Fig. 1: eine Seitenansicht der erfindungsgemäßen Abstechvorrichtung (Vorderseite);
- Fig. 2: eine Ansicht der Abstechvorrichtung nach der Fig. 1 von der anderen Seite (Rückseite);
- Fig. 3: eine Ansicht der Abstechvorrichtung nach den Fig. 1 und 2 von vorne aus Pfeilrichtung A der Fig. 2;
- Fig. 4: eine Draufsicht auf eine Klingenplatte;
- Fig. 5: eine Stirnansicht der Klingenplatte nach der Fig. 4;
- Fig. 6: eine Vergrößerung der Einzelheit Z nach der Fig. 3.

Die Abstechvorrichtung weist als wesentliche Bestandteile eine Aufnahme 1 auf, die aus einer vorderen Aufnahmescheibe 2 und einem hinteren Aufnahmeteil 3 besteht, einer Klingenplatte 4 und einem Stechplättchen 5. Über zwei Zylinderschrauben 6 ist die Aufnahmescheibe 2 mit dem hinteren Aufnahmeteil 3 verbunden, das in Form eines quadratischen länglichen Klotzes ausgebildet ist. Die Aufnahmescheibe 2 besitzt in Seitenansicht gesehen eine Halbkreisform bzw. der Halbkreis ist etwas über die Mittelachse hinaus vergrößert.

Auf der von dem Aufnahmeteil 3 abgewandten Seite wird auf die Aufnahmescheibe 2 die Klingenplatte aufgesetzt. Hierzu besitzt diese eine Nabe 7 mit einer Gewindebohrung 8. Die Nabe 7 wird in eine zentrale Lagerbohrung 9 in der Aufnahmescheibe 2 eingesetzt.

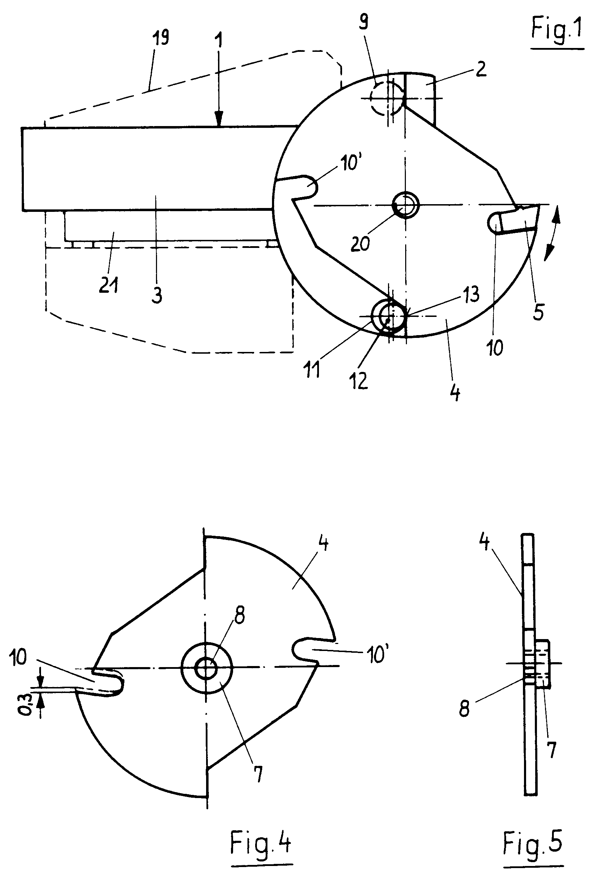

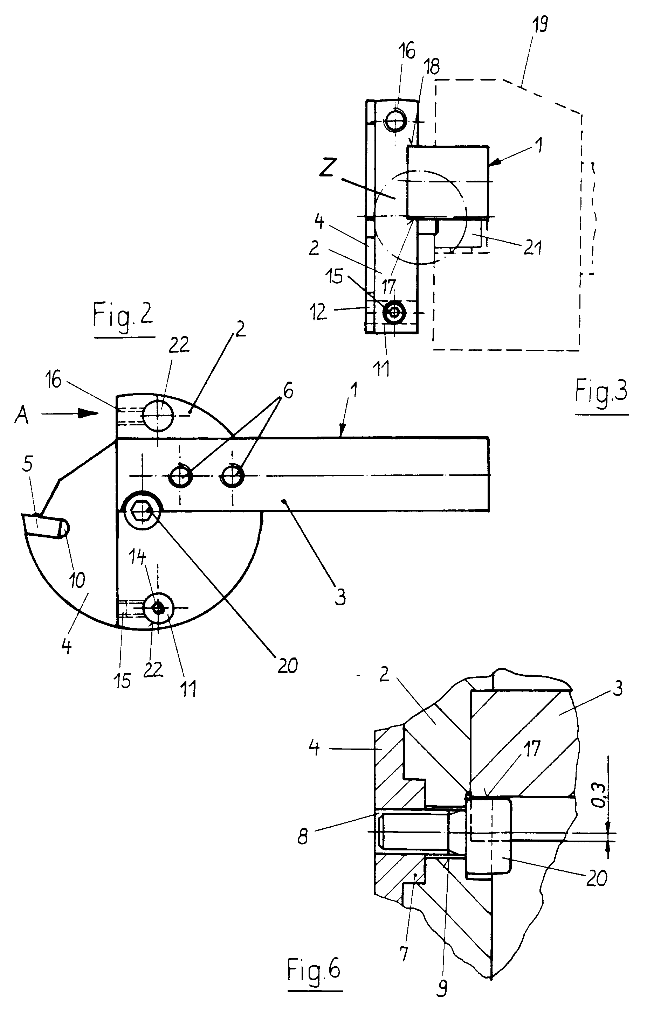

Wie inbesondere aus den Fig. 1 und 2 ersichtlich ist, sind die Umfangswände der Aufnahmescheibe 2 und der Klingenplatte 4 teilweise deckungsgleich. Die Klingenplatte 4 steht lediglich um das Schnittiefenmaß vorne über die Aufnahmescheibe 2 vor (siehe Fig. 2).

In eine Aussparung 10 in der Umfangswand der Klingenplatte 4 ist das Stechplättchen 5 mit Preßsitz eingeklemmt. Hierzu verjüngt sich die Aussparung 10 nach hinten zu entsprechend leicht, so daß das Stechplättchen 5 von vorne bzw. außen her nach hinten in die Aussparung 10 bis zur Klemmung geschoben wird.

Wie aus der Fig. 4 ersichtlich ist, ist diametral zu der Aussparung 10 noch eine weitere Aussparung 10' in der Klingenplatte 4 angeordnet. Durch ein um 180° verdrehtes Einsetzen der Klingenplatte 4 in die Aufnahmescheibe 2 kann die Aussparung 10' zum Einsatz kommen, wenn die Aussparung 10 beschädigt ist oder zuviel Spiel besitzt.

In eine Aufnahmebohrung 22 in der Aufnahmescheibe 2, die sich durch diese von der Rückseite aus bis zur Vorderseite erstreckt, ist ein Drehbolzen 11 gesteckt, auf dessem vorderen aus der Aufnahmescheibe ragenden Teil ein Exzenterkopf 12 angeordnet ist. Der Exzenterkopf 12 liegt an einer Anschlagkante 13 der Klingenplatte 4 an. Die Rückseite des Drehbolzens 11 besitzt ein Verstellglied, das als Innensechskantbohrung 14 in dem Drehbolzen 11 selbst ausgebildet ist.

Für eine Links- und Rechtsmontage können in der Aufnahmescheibe 3 sich gegenüberliegend zwei Aufnahmebohrungen 22 für einen Drehbolzen 11 vorgesehen sein (siehe Fig. 1), wobei dann der Drehbolzen 11 in die jeweilige Bohrung eingesetzt wird. In gleicher Weise ist damit auch die stirnseitige Bohrung 16 für die Klemmschraube 15 doppelt.

Die Aufnahmescheibe 3 besitzt auf der dem Aufnahmeteil 1 zugewandten Seite Anlagekanten 17 und 18, die jedoch so angeordnet sind, daß die Aufnahmescheibe 3 um 0,3 mm über der Mittenachse der Einspannung bzw. des zu bearbeitenden Werkstückes liegt (siehe Ausschnittvergrößerung nach Fig. 6).

Für ein Abstechen oder ein Einstechen wird die Abstechvorrichtung als Ganzes in einen Werkzeughalter 19 eingesetzt. Der Werkzeughalter 19 ist in den Fig. 1 und 3 gestrichelt dargestellt.

Die Verbindung der Klingenplatte 4, in der das gewünschte Stechplättchen 5 eingeklemmt ist, erfolgt durch eine zentrale Lagerschraube 20. Die Lagerschraube 20 wird von der Rückseite her durch die Lagerbohrung 9 in der Aufnahmescheibe 2 gesteckt und in die Gewindebohrung 8 der Klingenplatte 4 eingeschraubt. Dabei wird die Lage der Klingenplatte 4 zu der Aufnahmescheibe 2 so gewählt, daß der Exzenterkopf 12 des Drehbolzens 11 an der Anschlagkante 13 anliegt. Auf diese Weise ist eine Grobeinstellung erreicht. Die Feineinstellung erfolgt nach einem Lösen der Klemmschraube 15 durch ein Verdrehen des Drehbolzens 11. Hierzu wird in die Innensechskantbohrung 14 des Drehbolzens 11 ein Sechskantschlüssel eingesetzt, womit der Exzenterkopf 12 entsprechend verdreht wird und damit eine Verstellung bzw. radiale Verdrehung der Klingenplatte 4 gegenüber der Aufnahmescheibe 2 erfolgt (siehe Pfeilrichtung in Fig. 1). Auf diese Weise läßt sich das Stechplättchen 5 exakt in seiner Höhenlage auf Mitte einstellen.

Anstelle der höhenversetzten Lage der Aufnahmescheibe 2 gegenüber dem Aufnahmeteil 1 kann die Aussparung 10 bzw. 10' in der Klingenplatte 4 um ein geringes Maß zu hoch, z.B. 0,3 mm eingebracht werden, und zwar derart, daß nach einem Einsetzen eines Stechplättchens 5 in die Aussparung 10 dessen vordere Spitze im nicht eingestellten Zustand über der Mittellinie des zu bearbeitenden Werkstückes liegt (siehe hierzu die gestrichelte Darstellung in der Fig. 4).

## Patentansprüche

1. Abstechvorrichtung für sich drehende Werkstücke mit einer Klingenplatte (4), die an einer an die Klingenplatte (4) zu deren Abstützung angepassten Aufnahme (1) befestigt ist, und mit einem in eine Aussparung (10) der Klingenplatte (4) einsetzbaren Stechplättchen (5),
**dadurch gekennzeichnet,** daß die Klingenplatte (4) in einer Ebene senkrecht zur Einstichrichtung drehbar mit der Aufnahme (1) verbunden ist, wobei die relative Drehlage der Klingenplatte (4) zu der Aufnahme (1) einstellbar ist, daß die Klingenplatte (4) wenigstens annähernd scheibenförmig ausgebildet ist, daß die Aussparung (10) im Bereich einer Umfangswand der Klingenplatte (4) angeordnet ist, daß die Klingenplatte (4) mit einer Nabe (7) versehen ist, die in eine Lagerbohrung (9) eines als Aufnahmescheibe (2) ausgebildeten vorderen Teiles der Aufnahme (1) eingesetzt ist, wobei die Aufnahmescheibe in ihrer Form wenigstens teilweise bzw. annähernd an die Klingenplatte (4) zur Abstützung der Klingenplatte (4) angepasst ist und daß die Klingenplatte (4) mit wenigstens einer Anschlagkante (13) an einem Anschlag der Aufnahme (1) anliegt.

2. Abstechvorrichtung nach Anspruch 1,
**dadurch gekennzeichnet,** daß der Anschlag in der Aufnahme (1) als Einstellglied (12) ausgebildet ist.

3. Abstechvorrichtung nach Anspruch 2,
**dadurch gekennzeichnet,** daß das Einstellglied einen Drehbolzen (11) mit einem Exzenterkopf (12) aufweist.

4. Abstechvorrichtung nach Anspruch 3,
**dadurch gekennzeichnet,** daß der Drehbolzen (11) auf seiner Rückseite mit einem Verstellglied (14) versehen ist.

5. Abstechvorrichtung nach Anspruch 3 oder 4,
**dadurch gekennzeichnet,** daß der Drehbolzen (11) durch eine in der Aufnahme (1) angeordnete Klemmschraube (15) arretierbar ist.

6. Abstechvorrichtung nach einem der Ansprüche 1 - 5,
**dadurch gekennzeichnet,** daß die Aufnahmescheibe (2) wenigstens annähernd eine Halbkreisform besitzt.

7. Abstechvorrichtung nach einem der Ansprüche 1 - 6,
**dadurch gekennzeichnet,** daß die Aufnahme (1) zweiteilig ausgebildet ist, wobei das vordere Teil als Aufnahmescheibe (2) über Schrauben (6) und Anlagekanten (17,18) mit dem hinteren Teil (3) der Aufnahme (1) verbunden ist.

8. Abstechvorrichtung nach einem der Ansprüche 1-7,
**dadurch gekennzeichnet,** daß die Klingenplatte (4) derart in der Aufnahme (1) angeordnet ist, daß deren Mittellinie im nichteingestellten Zustand über der Mittellinie der Aufnahme (1) bzw. des zu bearbeitenden Werkstückes liegt.

9. Abstechvorrichtung nach Anspruch 7 und 8,
**dadurch gekennzeichnet,** daß die Anlagekanten (17,18) des vorderen Teiles (2) der Aufnahme (1), an denen die Klingenplatte (4) anliegt, außermittig zur Mittelachse des zu bearbeitenden Werkstückes angeordnet sind.

10. Abstechvorrichtung nach einem der Ansprüche 1-9,
**dadurch gekennzeichnet,** daß die Aussparung (10) in der Klingenplatte (4) so angeordnet ist, daß die vordere Spitze des Stechplättchens (5) im nichteingestellten Zustand über der Mittellinie des zu bearbeitenden Werkstückes liegt.

11. Abstechvorrichtung nach einem der Ansprüche 1-10,
**dadurch gekennzeichnet,** daß das Stechplättchen (5) in die Aussparung (10) der Klingenplatte (4) mit Preßsitz eingesetzt ist, wobei sich die Aussparung (10) ggf. nach hinten zu verjüngt.

12. Abstechvorrichtung nach einem der Ansprüche 1-11,
**dadurch gekennzeichnet,** daß die Klingenplatte (4) als Wendeplatte mit wenigstens zwei Aussparungen (10,10') ausgebildet ist.

## Claims

1. Cutting-off device for rotating workpieces, comprising a blade plate (4) secured to a holder (1) adapted to the blade plate (4) in order to support it, and comprising a cutting-off plate (5) which can be inserted into a recess (10) in the blade plate (4), characterised in that the blade plate (4) is rotatably connected to the holder (1) in a plane perpendicular to the cutting-in direction, the position of the blade plate (4) relative to the holder (1) being adjustable, that the blade plate (4) is at least approximately disc-shaped, that the recess (10) is arranged in the region of a circumferential wall of the blade plate (4), that the blade plate (4) is provided with a hub (7) which is inserted into a bearing bore (9) in a front part of the holder (1) in the form of a holding disc (2), the shape of the holding disc being at least partially or approximately adapted to the blade plate (4) in order to support the blade plate (4), and that the blade plate (4) bears via at least one stop edge (13) against a stop of the holder (1).

2. Cutting-off device according to claim 1, characterised in that the stop in the holder (1) is in the form of an adjusting element (12).

3. Cutting-off device according to claim 2, characterised in that the adjusting element has a pivot pin (11) with an eccentric head (12).

4. Cutting-off device according to claim 3, characterised in that the pivot pin (11) is provided on its rear face with a controlling element (14).

5. Cutting-off device according to claim 3 or claim 4, characterised in that the pivot pin (11) can be locked by a clamping screw (15) arranged in the holder (1).

6. Cutting-off device according to one of claims 1 - 5, characterized in that the holding disc (2) is at least approximately semi-circular.

7. Cutting-off device according to one of claims 1 - 6, characterized in that the holder (1) is made in two parts, the front part in the form of a holding disc (2) being connected to the rear part (3) of the holder (1) via screws (6) and contact edges (17, 18).

8. Cutting-off device according to one of claims 1-7, characterized in that the blade plate (4) is arranged in the holder (1) in such a manner that its centre line is situated over the centre line of the holder (1) or of the workpiece to be machined in the non-adjusted state.

9. Cutting-off device according to claims 7 and 8, characterized in that the contact edges (17, 18) of the front part (2) of the holder (1) against which the blade plate (4) bears are arranged eccentrically relative to the centre axis of the workpiece to be machined.

10. Cutting-off device according to one of claims 1-9, characterized in that the recess (10) is arranged in the blade plate (4) in such a manner that the front point of the cutting-off plate (5) is situated over the centre line of the workpiece to be machined in the non-adjusted state.

11. Cutting-off device according to one of claims 1-10, characterised in that the cutting-off plate (5) is inserted with a press fit into the recess (10) in the blade plate (4), the recess (10) optionally tapering towards the rear.

12. Cutting-off device according to one of claims 1-11, characterised in that the blade plate (4) is in the form of a turnplate with at least two recesses (10, 10').

## Revendications

1. Dispositif de décolletage de pièces rotatives, comportant une plaque de lame (4) qui est fixée à une monture (1) ajustée à la plaque de lame (4) pour l'épauler, et une plaquette de coupe (5) se logeant dans un évidement (10) de la plaque de lame (4), **caractérisé** en ce que la plaque de lame (4) est raccordée à la monture (1) de manière pivotante dans un plan, perpendiculairement à la direction de plongée, la position relative de pivotement de ladite plaque (4) par rapport à la monture (1) étant réglable, en ce que la plaque de lame (4) est au moins approximativement en forme de disque, en ce que ledit évidement (10) est disposé dans la zone d'une paroi circonférentielle de la plaque de lame (4), en ce que la plaque de lame (4) est pourvue d'un moyeu (7) qui est logé dans un alésage récepteur (9) d'une partie avant de la monture (1), agencée en plaque de monture (2), la plaque de monture ayant une forme au moins partiellement ou approximativement adaptée à la plaque de lame (4) pour l'épauler, et en ce que la plaque de lame (4) s'appuie par au moins un bord de butée (13) contre une butée de la monture (1).

2. Dispositif selon la revendication 1, **caractérisé** en ce que ladite butée est formée par un élément de réglage (12) sur la monture (1).

3. Dispositif selon la revendication 2, **caractérisé** en ce que l'élément de réglage comporte un boulon rotatif (11) pourvu d'une tête excentrique (12).

4. Dispositif selon la revendication 3, caractérisé en ce que le boulon rotatif (11) est pourvu d'un organe de manoeuvre (14) sur son côté arrière.

5. Dispositif selon la revendication 3 ou 4, **caractérisé** en ce que le boulon rotatif (11) est susceptible d'être bloqué au moyen d'une vis de blocage (15) disposée dans la monture (1).

6. Dispositif selon l'une des revendications 1 à 5, **caractérisé** en ce que la plaque de monture (2) a au moins approximativement une forme semi-circulaire.

7. Dispositif selon l'une des revendications 1 à 6, **caractérisé** en ce que la monture (1) est en deux parties dont la partie avant servant de plaque de monture (2) est fixée par des vis (6) et des bords d'appui (17, 18) à la partie arrière (3) de la monture (1).

8. Dispositif selon l'une des revendications 1 à 7, **caractérisé** en ce que la plaque de lame (4) est disposée sur la monture (1) de telle manière que son axe central, dans l'état non réglé, se trouve au-dessus de l'axe central de la monture (1) ou de la pièce à usiner.

9. Dispositif selon les revendications 7 et 8, **caractérisé** en ce que les bords d'appui (17, 18) de la partie avant (2) de la monture (1), contre lesquels s'appuie la plaque de lame (4), sont décentrés par rapport à l'axe central de la pièce à usiner.

10. Dispositif selon l'une des revendications 1 à 9, **caractérisé** en ce que ledit évidement (10) est disposé dans la plaque de lame (4) de telle manière que la pointe antérieure de la plaquette de coupe (5), dans l'état non réglé, se trouve au-dessus de l'axe central de la pièce à usiner.

11. Dispositif selon l'une des revendications 1 à 10, **caractérisé** en ce que la plaquette de coupe (5) est montée dans l'évidement (10) de la plaque de lame (4) par ajustement pressé, l'évidement (10) étant rétréci vers l'arrière le cas échéant.

12. Dispositif selon l'une des revendications 1 à 11, **caractérisé** en ce que la plaque de lame (4) est agencée en plaque tournante, comportant au moins deux évidements (10, 10').
